# EUROPÄISCHE PATENTSCHRIFT

(11) **EP 0 455 991 B1**
(45) Veröffentlichungstag und Bekanntmachung des Hinweises auf die Patenterteilung: **20.03.1996**
(21) Anmeldenummer: 91105467.4
(22) Anmeldetag: 06.04.1991
(51) Int. Cl.: H01S 3/10, H01S 3/098, H01S 3/081

(54) **Verfahren zur Erzeugung kurzer Laserpulse und Laser zu dessen Durchführung**
Method for generating short laser pulses and laser for carrying out the method
Méthode pour engendrer des impulsions laser courtes et laser pour la mise en oeuvre de la méthode

(30) Priorität: 11.05.1990 CH 1610/90
(43) Veröffentlichungstag der Anmeldung: 13.11.1991
(73) Patentinhaber: Weber, Heinz Paul, Prof. Dr., CH-3122 Kehrsatz (CH)
(72) Erfinder: Bi, Junging, CH-3008 Bern (CH); Beaud, Paul, CH-3014 Bern (CH); Schütz, Jürg, CH-3303 Jegenstorf (CH); Hodel, Walter, CH-3012 Bern (CH); Weber, Heinz Paul, CH-3122 Kehrsatz (CH)
(74) Vertreter: Keller, René, Dr.

(56) Entgegenhaltungen:
- OPTICS LETTERS. Bd. 14, Nr. 1, 1. Januar 1989, NEW YORK US,Seiten 48 - 50; J. MARK ET AL.: 'Femtosecond pulse generation in laser with a nonlinear external resonator'
- OPTICS LETTERS. Bd. 14, Nr. 1, 1. Januar 1989, NEW YORK US,Seiten 39 - 41; P.N. KEAN ET AL.: 'Enhanced mode locking of color-center lasers'
- JOURNAL OF THE OPTICAL SOCIETY OF AMERICA. B Bd. 5, Nr. 11, November 1988, NEW YORK US Seiten 2311 - 2314; M. LAMBSDORFF ET AL.: 'Low-noise hybrid mode locking of a femtosecond continuous-wave dye laser with Gires-Tournois interferometers'
- OPTICS COMMUNICATIONS. Bd. 27, Nr. 1, Oktober 1978, AMSTERDAM NL,Seiten 127 - 132; J.P. RYAN ET AL.: 'Comparison of synchronous pumping and passive mode-locking of cw dye lasers for the generation of picosecond and subpicosecond light pulses'
- OPTICS LETTERS. Bd. 12, Nr. 2, Februar 1987, NEW YORK US,Seiten 117 - 119; W.B. WHITTEN ET AL.: 'Mode selection in a continuous-wave dye laser with an intracavity photorefractive element'
- OPTICS COMMUNICATIONS. Bd. 80, Nr. 1, 1. Dezember 1990, AMSTERDAM NL,Seiten 31 - 36; P. BEAUD ET AL.: 'Experimental observation of the self-stabilization of a synchronously pumped dye laser'
- N. McCarthey, D. Gay: "Noise reduction in an argon laser with a phase-conjugating external cavity", Optics Letters, Bd. 16, Nr. 13, 01.07.1991, Seiten 1004 - 1006
- P. Beaud, J.Q. Bi, J. Schütz, W. Hodel, H.P. Weber: "Ultrafast Phenomena VII", C.B. Harris, E.P. Ippen, G.A. Mourou, A.H. Zewail, eds. Bd. 53 der "Springer Series in Chemical Physics" (Springer Verlag, Berlin, 1990) Seiten 23 - 25

## Beschreibung

Die Erfindung betrifft ein Verfahren zur Erzeugung kurzer Laserpulse gemäß dem Oberbegriff des Patentanspruchs 1 und einen Laser zur Durchführung des Verfahrens gemäß dem Oberbegriff des Patentanspruchs 5.

Unter hochfrequenten Energierauschanteilen einer Laserausgangsstrahlung werden Energierauschanteile im Frequenzbereich von 100 kHz bis einige GHz, bevorzugt von 100 kHz bis 4 MHz, verstanden.

Das erfindungsgemäße Verfahren und der erfindungsgemäße Laser ergeben bei einem gepulsten Laser infolge der Verringerung der Rauschanteile eine Stabilisierung der Spitzenintensität und der Pulsdauer der Laserpulse.

Unter der spontanen Strahlungsemission eines Lasers wird eine Strahlung mit gleicher Strahlungsfrequenz wie die Laserausgangsstrahlung verstanden, welche bei einem zwar gepumpten, aber nicht oszillierenden Laser in der Richtung im Laserresonator verläuft, in der auch die Laserausgangsstahlung bei oszilliernden Laser verlaufen würde. Ein gepumpter Laser kann z. B. durch Verkippen seiner Resonatorspiegel am Oszillieren gehindert werden.

Unter modengekoppelten Lasern werden Laser zur Erzeugung von Pulsen im Piko- und Subpikosekundenbereich verstanden, bei denen eine aktive oder passive Verlust-, Verstärkungs- oder Phasenmodulation im Laserresonator durchgeführt wird.

Ein Verfahren zur Erzeugung kurzer Laserpulse unter Verwendung eines Rückkopplungsweges, der optisch nichtlineare Komponenten enthält, ist aus der Veröffentlichung von P.N. Kean et al. "Enhanced mode locking of color-center lasers", Opt. Lett. Vol. 14, No.1, Jan.1, 1989, pp. 39 - 41 bekannt. Bei dem bekannten Verfahren wird ein Farbzentrenlaser mit einem KCl:Tl Farbzenterkristall kontinuierlich mit einem modegelockten Nd:YAG-Laser gepumpt. Die Reflexion des Auskoppelspiegels des Laserresonators beträgt 80%. Mit einem Strahlteiler außerhalb des Resonators auf der Seite des Auskoppelspiegels wird ein Teil der Laserausgangsleistung in einen 2,2 m langen, Germanium enthaltenden Singlemode-Wellenleiter eingekoppelt. Am Ende des wellenleiters ist ein Spiegel angebracht, der das aus dem Wellenleiter austretende Licht wieder in diesen zurückreflektiert. Der Abstand zwischen dem Ende des Wellenleiters und dem Wellenleiterspiegel ist mit einer piezoelektrischen Verschiebeeinrichtung (PZT) verstellbar. Die in den Wellenleiter eingekoppelte Energie kann mit einem Neutraldichtefilter (ND) gedämpft werden. Die vom Strahlteiler in den Wellenleiter eingekoppelte Laserstrahlung durchläuft diesen, wird am Wellenleiterspiegel reflektiert, durchläuft den Wellenleiter ein weiteres Mal und wird über den Strahlteiler und den Auskoppelspiegel wieder in den Laserresonator eingekoppelt. Aufgrund optischer Nichtlinearitäten im Wellenleiter, hervorgerufen durch den vom Laserpuls induzierten Kerr-Effekt, ergibt sich eine Frequenzverbreiterung des im Wellenleiter sich ausbreitenden Pulses. Die Einstellung einer optimalen Phasenbeziehung zwischen der Laserstrahlung im Laserresonator und der über den Wellenleiter rückgekoppelten Strahlung erfolgt mittels einer elektronischen Auswerteschaltung, welche den Wellenleiterspiegel über die Verschiebeeinrichtung in die optimale Distanz zum Wellenleiterende bewegt. Durch die Überlagerung der im Laserresonator oszillierenden Laserpulse mit den durch den Wellenleiter frequenzverbreiterten Pulsen entstehen im Laserresonator Laserpulse mit Pulsbreiten im Piko- und Subpikosekundenbereich. Wird auch noch die in den Wellenleiter eingekoppelte Energie mit dem Neutraldichtefilter optimiert, so ergeben sich extrem kurze Laserpulse in der Größenordnung von 1,1 ps (Pikosekunden = 10⁻¹ Sekunden). Bei einer Verkürzung des Wellenleiters auf 24 cm Länge wurden Laserpulse mit einer Pulsbreite von 260 fs (Femtosekunden = 10⁻¹⁵ Sekunden) erreicht.

Im folgenden werden Beispiele des erfindungsgemäßen Lasers und des erfindungsgemäßen Verfahrens zur Erzeugung kurzer, stabiler Laserpulse infolge der Verringerung der Energierauschanteile anhand von Zeichnungen näher erläutert. Es zeigen:
- Fig. 1: eine schematische Darstellung eines Farbstofflasers zur Erzeugung kurzer Pulse mit einer Nebenrückführeinrichtung,
- Fig. 2: hochfrequente Energierauschanteile (engl. power spectrum) von Laserpulsen des Farbstofflasers ohne Nebenrückführeinrichtung, der mit 4 ps breiten Laserpulsen eines Nd:YAG-Laser mit einer Repetitionsfrequenz von 82 MHz synchron gepumpt wird,
- Fig. 3: gegenüber **Figur 2** verringerte hochrequente Energierauschanteile von Laserpulsen des Farbstofflasers hervorgerufen durch die erfindungsgemäße Nebenrückführeinrichtung,
- Fig. 4: ein Diagramm, daß die Abhängigkeit der Längenveränderung eines optischen Nebenweges der Nebenrückführeinrichtung gegenüber einem Abschwächungsfaktor der auf dem Nebenweg abgeschwächten Laserpulse darstellt,
- Fig. 5: eine Variante der Nebenrückführeinrichtung, und
- Fig. 6: eine weitere Variante der Nebenrückführeinrichtung.

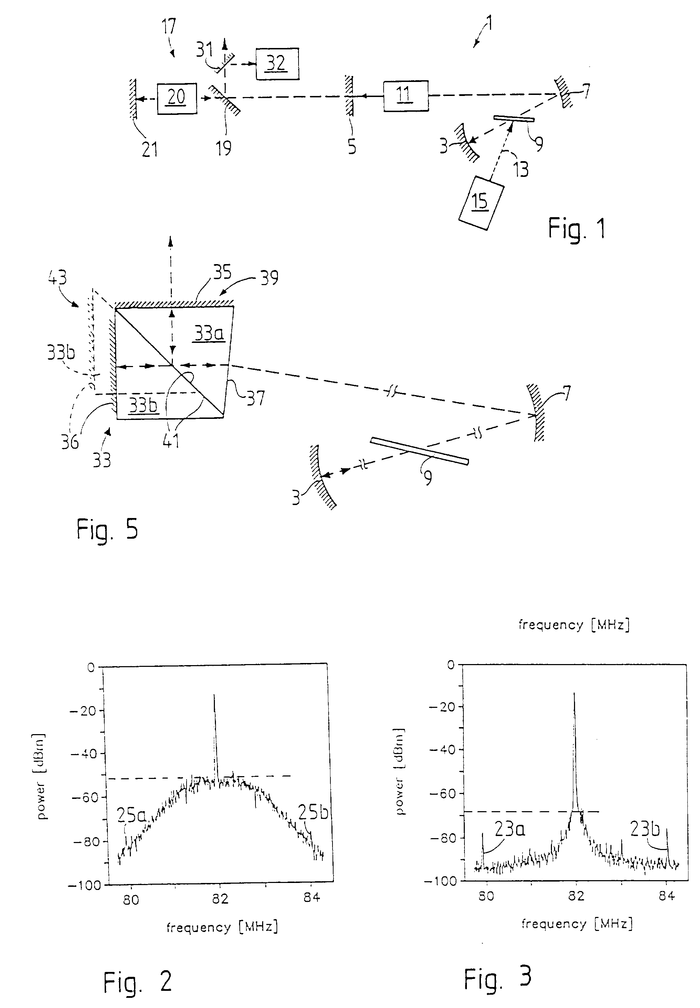

Der in **Figur 1** dargestellte Farbstofflaser zur Erzeugung kurzer Pulse hat einen Laserresonator **1** mit den beiden Resonatorspiegeln **3** und **5** und einem für die Funktionsweise unwichtigen Umlenkspiegel **7** mit einem Reflexionsgrad von annähernd 100 %. Der eine Resonatorspiegel **3** hat einen Reflexionsgrad von annähernd 100 % und der andere als Auskoppelspiegel wirkende Resonatorspiegel **5** einen Reflexionsgrad von 87 %. Die beiden Resonatorspiegel **3** und **5** sind in einem Abstand von 1,83 m angeordnet. Innerhalb des Laserresonators **1** befindet sich ein Farbstoffstrom **9** (sog. Jet) und ein Etalon **11** als frequenzbestimmendes Element. Mit dem Etalon **11** ist der Laserresonator **1** zur Erzeugung von Strahlung mit einer Wellenlänge zwischen 1,25 und 1,35 µm abstimmbar; es wird für das unten beschriebene Verfahren so eingestellt, daß Laserpulse mit einer Wellenlänge von 1,3 µm erzeugt werden. Der Farbstoff des Jets **9** ist ein Infrarotfarbstoff C₄₄H₃₀S₂ClF₇O₂ bekannt unter der Bezeichnung No. 26⁺HFB⁻ und kann z. B. bei der Firma Lambda Physics bezogen werden. Der Infrarotfarbstoff ist in α-hydroxy-Toluen einem Benzylalkohol gelöst, das z.B. unter dem Namen golden label bei der Firma Aldrich bezogen werden kann.

In den Jet **9** werden als Pumppulse **13** Laserpulse eines Nd:YAG Lasers **15** mit einer Pulsbreite von 4 ps und einer Repetitionsfrequenz von 82 MHz in Abstimmung mit der Resonatorlänge von 1,83 m eingestrahlt. Diese Art der Anregung eines Lasers wird als synchrones Pumpen bezeichnet. Die Erzeugung derartiger Nd:YAG-Laserpulse ist z. B. in der Veröffentlichung von B. Zysset et al., "200-femtosecond pulses at 1.06 µm generated with a double-stage pulse compressor", Opt. Lett., Vol. 11, March 1986, pp. 156 - 158 beschrieben. Die Lebensdauer des oberen angeregten Laserniveaus des Farbstoffes liegt bei etwa 11 ps. Die mit dem Farbstofflaser ohne nachfolgend beschriebene Nebenrückführeinrichtung **17** erzeugten Laserpulse haben eine Pulsbreite von 300 fs, die auf dem optischen Hauptweg zwischen den Resonatorspiegeln **3** und **5** mit 82 MHz hin- und herpendeln. Das hochfrequente Energierauschspektrum dieser Laserpulse ist in **Figur 2** im Bereich von achtzig bis vierundachtzig Megahertz dargestellt. Die die Frequenz von zweiundachtzig Megahertz umgebenden Energierauschanteile liegen annähernd glockenkurvenförmig um den Fußpunkt des 82 MHz-Wertes mit einem maximalen Rauschpegel von etwa 52 dBm.

Außerhalb des Laserresonators **1** auf der Seite des Auskoppelspiegels **5** befindet sich eine als Nebenrückführeinrichtung **17** bezeichnete Anordnung mit optisch linear wirkenden Komponenten, welche einen Bruchteil der Intensität der im Laserresonator **1** erzeugten Laserpulse wieder in das Modevolumen des Resonators **1** zurückführt. Die Anordnung wurde zur Unterscheidung gegenüber einer Hauptrückführeinrichtung der erzeugten Laserpulse durch die beiden Resonatorspiegel **3** und **5** als Nebenrückführeinrichtung **17** bezeichnet. Die in **Figur 1** dargestellte Nebenrückführeinrichtung **17** hat einen Strahlteiler **19**, einen einstellbaren Abschwächer **20** und einen Spiegel **21**.

Der Strahlteiler **19** lenkt annähernd 100 % der den Resonatorspiegel **5** durchdringenden Intensität der Laserpulse ab und läßt nur einen Teil von 10⁻ der Intensität der Laserpulse durch. Der Abschwächer **20** ist so ausgelegt, daß er einstellbar die ihn durchdringenden Pulse um einen Faktor zwischen ungedämpft und 10⁻ abschwächen kann. Der Spiegel **21** ist so ausgelegt, daß er einen Teil von 10⁻ der auftreffenden Intensität wieder in den Strahl zurückreflektiert. Er kann in seiner Lage in der Laserstrahlachse um einige Millimeter verschoben werden. Der Auskoppelspiegel **5**, der Strahlteiler **19**, der Abschwächer **20** und der Spiegel **21** sind so angeordnet, daß die auf den Spiegel **21** auftreffenden abgeschwächten Laserpulse wieder in das Modevolumen im Jet **9** der im Laserresonator **1** oszillierenden Resonatorwelle (Laserpulse) geführt wird. Der optische Hauptweg zwischen den Resonatorspiegeln **3** und **5** und der optische Nebenweg zwischen dem Auskoppelspiegel **5** und dem Spiegel **21** sind fast gleich lang gewählt, d. h. der von Spiegel **21** wieder in den Laserresonator **1** zurückreflektierte Intensitätsanteil eines Laserpulses wird immer dem jeweils nachfolgenden Laserpuls im Jet **9** überlagert. Die exakte Lage des Spiegels **21** ist, wie oben bereits erwähnt und unten genauer ausgeführt wird, um einige Millimeter in Laserstrahlrichtung zur Optimierung der Laserpulse verschiebbar. Auf den Einstellmechanismus und eine Regelung, welche den einmal eingestellten optischen Abstand des Spiegels **21** in der Größenordnung der optischen Wellenlänge hält, wird nicht weiter eingegangen.

Der vom Spiegel **21** in den Laserresonator **1** rückgeführte Teil der Strahlung der Laserpulse wird je nach Einstellung des Abschwächers **20** um einen Faktor zwischen 10⁻⁶ und 10⁻¹⁰ abgeschwächt, d.h. es werden Intensitäten in den Laserresonator **1** rückgeführt, die in der Größenordnung von 0,5- bis 50 000-facher Stärke der spontanen Strahlungsemission der Resonatorwelle liegen; im Extremfall werden nur einige wenige Photonen rückgeführt.

Durch die Rückführung dieser extrem geringen Pulsintensitäten in das Modevolumen der Laserpulse im Jet **9** zeitlich passend zu den oszillierenden Laserpulsen werden die hochfrequenten Energierauschanteile der erzeugten Laserpulse in Gegensatz zu dem in **Figur 2** dargestellten hochfrequenten Energierauschspektrum drastisch erniedrigt. Das Energierauschspektrum von Laserpulsen mit einer rückgeführten Intensität von 10⁻⁸ ist in **Figur 3** dargestellt. Im Gegensatz zum glockenförmigen Rauschverlauf ist hier ein exponentieller Rauschverlauf zu erkennen, der in den 82-MHz-Peak einmündet. Der maximale Rauschpegel liegt bei 67 dBm und ist um 15 dBm, d. h. damit bedeutend tiefer als der in **Figur 2** gezeigte. Beim Vergleich der **Figuren 2** und **3** ist zu beachten, daß die Werte des Frequenzpegels an der Ordinate in einem logarithmischen Maß, nämlich in Dezibel [dBm], angegeben sind. Die Spitzen **23a** und **23b** der Frequenzpegelwerte bei etwa 80 MHz und 84 MHz beruhen auf besonderen Gegebenheiten des Versuchsaufbaues, auf die nicht weiter eingegangen wird. Die Spitzen **23a** und **23b** sind aufgrund des hohen Rauschpegels als gerade noch erkennbare spitzen **25a** und **25b** in der **Figur 2** erkennbar vorhanden.

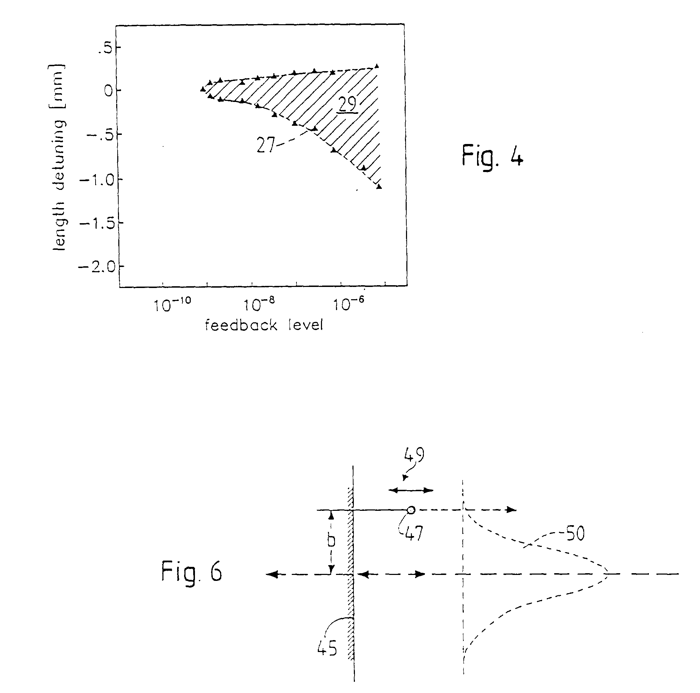

Die Länge des optischen Nebenwegs der Nebenrückführeinrichtung **17** muß genau eingestellt werden und der einmal eingestellte Wert auch auf Bruchteile der Laserwellenlänge während des Betriebs stabil gehalten werden. Die Abhängigkeit der Verstellung des Spiegels **21** zur Veränderung der Länge des Nebenweges gegenüber der rückgeführten Intensität ist in **Figur 4** dargestellt, wobei auf der Abszisse der Abschwächungsfaktor der Intensität der den Nebenweg durchlaufenden Pulse dargestellt ist. Auf der Ordinate ist die Verschiebung des Spiegel **21** in Strahlrichtung aufgetragen, wobei die positiven bzw. negativen Werte bedeuten, daß der Spiegel **21** vom Auskoppelspiegel **5** weg bzw. auf ihn zu bewegt wurde. Die gestrichelte Kurve **27** umschließt einen schraffierten Bereich **29**, indem alle Meßwerte liegen, bei denen die Energiefluktuation der einzelnen Laserpulse außerhalb des Laserresonators **1**, gemessen am Ort **31** mit einem Energiemeßgerät **32** kleiner ist als 0,5 %. Diese kleinen Energiefluktuationen von 0,5% sind bei einer Rückführung zwischen 10⁻⁶ und 10⁻¹⁰ der Intensität der Laserpulse und einer Verschiebung des Spiegels **21** von weniger als ± 0,5mm einhaltbar. Die Verlängerung des optischen Nebenweges ist gleich dem doppelten Wert der Verschiebung des Spiegels **21**.

Anstelle die Nebenrückführeinrichtung **17**, wie oben beschrieben auszuführen, kann sie als kompakte Einheit **33** ausgebildet sein, die einen dem Auskoppelspiegel **5** des Laserresonators **1** analogen Auskoppelspiegel **35**, einem dem Spiegel **21** für den Nebenweg analogen Spiegel **36** und einem dem Strahlteiler **19** analogen Strahlteiler **41** hat. Auf einen zum Abschwächer **20** analogen Abschwächer wird, wie unten erläutert, verzichtet.

Die Einheit **33** ist als geteilter, aus einem optisch linear wirkenden Material aufgebauter Kubus **33** mit einer zur Laserstrahlachse geneigten entspiegelten Pulseintrittsfläche **37**, die keine Laserstrahlung in den Laserresonator **1** zurücksendet, ausgebildet und in **Figur 5** dargestellt. Die der geneigten Pulseintrittsfläche **37** gegenüberliegende Kubusfläche **43** ist mit ihrer Spiegelfläche **36** so verspiegelt (d.h. entspiegelt), daß sie 10⁻ der auf sie fallenden Intensität der über die als Strahlteiler wirkenden Trennflächen **41** abgelenkten Laserpulse in sich selbst rückreflektiert. Der Reflexionsgrad der Trennflächen **41** der beiden Kubushälften **33a** und **33b** ist so gewählt, daß annähernd die ganze Intensität auf die senkrecht zur Kubusfläche **43** liegende Kubusfläche **39** reflektiert wird und nur 10⁻³ durch die Kubusfläche **43** hindurchgelassen werden. Die Kubusfläche **39** mit der Verspiegelung **35** ist analog zum Auskoppelspiegel **5** beschichtet und dient ebenfalls als Auskoppelspiegel für den Laserresonator, serresonator, wobei analog zum oben bereits beschriebenen Beispiel dann 87 % der Laserpulsintensität in den Laserresonator **1** rückreflektiert werden (Hauptweg) und die restlichen 13% nahezu vollständig den Laserresonator **1** als Ausgangspulse verlassen. Der Reflexionsgrad des Spiegels **36** auf der Kubusfläche **43** ist zusammen mit der Transmission der Trennfläche **41** so gewählt, daß eine Intensitätsabschwächung von 10⁻⁸ erreicht wird. Die rückreflektierte Intensität wirkt im Modevolumen der Laserstrahlung im Jet **9** mit der ursprünglichen Strahlung zusammen, wodurch wiederum Laserpulse mit dem oben beschriebenen niedrigen Rauschpegel erzeugt werden. Im Unterschied zur zuerst beschriebenen, obigen Anordnung befindet sich hier die Nebenrückführeinrichtung direkt im Laserresonator und die rückgeführten Laserpulse wirken direkt mit dem sie erzeugenden Puls zusammen. Auch hier liegt die auf den Nebenweg rückgeführte Intensität in der Größenordnung der Spontanemission der Resonatorwelle.

Die Länge des Nebenweges ist nicht mehr inbezug auf den Auskoppelspiegel **35** bestimmbar, sondern in bezug auf den Laserspiegel **3**, wobei Haupt- und Nebenweg allerdings bereits nach den Trennflächen **41** weitgehendst ineinander verlaufen. Die Verstellung der Länge des Nebenweges erfolgt durch Verschieben der den Spiegel 36 tragenden Kubushälfte **33b** und ihrer Trennfläche **41** entlang der Trennfläche **41** der den Auskoppelspiegel 35 tragenden Kubushälfte **33a**.

Anstelle den Spiegel **36** mit einem äußerst geringen Reflexionsgrad auszugestalten, kann auch die Kubusfläche **43** diffus reflektierend ausgebildet werden.

Anstelle die Einheit **33** als geteilten Kubus mit den Kubushälften **33a** und **33b** auszubilden, kann auch der Auskoppelspiegel **5**, wie in **Figur 6** dargestellt, in einen Auskoppelspiegel **45** mit zum Auskoppelspiegel **35** bzw. **5** analoger Krümmung und analogem Reflexionsgrad umgestaltet werden. Vor dem Auskoppelspiegel **45** befindet sich ein reflektierender, parallel zur Auskoppelspiegeloberfläche verlaufender Draht **47**, der parallel zur Laserstrahlrichtung im Laserresonator **49**, der ansonsten analog zum Laserresonator **1** aufgebaut ist, verschiebbar ist. Der Draht **47** wird in einem Abstand b von der Mitte der auf den Auskoppelspiegel **45** auftreffenden Laserpulse, deren örtliche Intensitätsverteilung **50** in **Figur 6** gestrichelt angedeutet ist, aufgespannt. Der Abstand **b** ist so gewählt, daß der Draht **47** nur von den äußersten Flanken der örtlichen Intensitätsverteilung der Laserpulse berührt wird. Die von der Drahtoberfläche in das Modevolumen im Jet **9** reflektierte Intensität der Laserpulse ist so bemessen, daß sie in der Größenordnung der spontanen Strahlungsemission der Resonatorwelle liegt

Anstelle die Nebenrückführeinrichtung mit dem Auskoppelspiegel 5, **35** bzw. **45** zu kombinieren, kann sie auch mit dem annähernd 100%-spiegel **3** kombiniert werden.

Der Vorteil der Nebenrückführeinrichtung bestehend aus dem Kubus **33** bzw. aus der Spiegel-Drahtanordnung **45/47** gegenüber der Nebenrückführeinrichtung **17** besteht in der leicht auszuführenden kompakten, und mechanisch stabilen Ausführungsart, wobei hier auf elektronische Stabilisierungsmaßnahmen verzichtet wird, wodurch sich eine bedeutend einfachere Bedienung und bedeutend günstigere Herstellungskosten ergeben.

Anstelle des in α-hydroxy-Toluen gelösten Infrarotfarbstoffes C₄₄H₃₀S₂ClF₇O₂ können auch andere Farbstoff und andere Lösungsmittel verwendet werden, ebenso lassen sich Farbzentrenkristalle verwenden. Es können anstelle von Farbstofflasern auch andere Laser, wie Festkörperlaser und Diodenlaser verwendet werden sowie auch Laser, welche als aktives Medium dotierte Wellenleiter haben.

## Patentansprüche

1. Verfahren zur Erzeugung kurzer Laserpulse, insbesondere mit Pulsbreiten im Piko- und Subpikosekundenbereich, mit einem modengekoppelten Laser, bei dem
ein Bruchteil der Strahlung jedes Laserpulses zusätzlich
zur Strahlung der durch die Resonatorspiegel **(3, 5**; **35; 45)** rückgekoppelten, im Laserresonator **(1, 49)** oszillierenden, die Laserpulse erzeugenden Resonatorwelle über einen optischen Nebenweg zeitlich verschoben in deren Modevolumen zurückgeführt wird, **dadurch gekennzeichnet**, daß
nur ein in der Größenordnung von 0,5- bis 50 000-facher Stärke der spontanen Strahlungsemission der oszillierenden Resonatorwelle liegendes Photonenpaket aus jedem Laserpuls über den optischen Nebenweg,
der nur optisch linear wirkende Komponenten enthält,
in das Modevolumen im Laserresonator (1) zurückgeführt wird.

2. Verfahren nach Anspruch 1, **dadurch gekennzeichnet**, daß
die Rückführung auf einen Wert zwischen 10⁻⁶ und 10⁻¹⁰ der Laserausgangsintensität eingestellt wird.

3. Verfahren nach Anspruch 1 oder 2, **dadurch gekennzeichnet**, daß
der optische Nebenweg so bemessen wird, daß die über ihn laufenden Photonenpakete in die im Laserresonator **(1, 49)** oszillierenden Laserpulse eingebracht werden.

4. Verfahren nach Anspruch 3, **dadurch gekennzeichnet**, daß
die optische Länge des optischen Nebenweges zur Optimierung der Laserpulse vorzugsweise in einem Bereich **(29)** von ± 0,5 mm gegenüber der optischen Länge des optischen Hauptweges zwischen den Resonatorspiegeln **(3, 5; 35; 45)** eingestellt wird.

5. Laser zur Durchführung des Verfahrens nach einem der Ansprüche 1 bis 4, mit
einer Nebenrückführeinrichtung **(17; 33; 45/47)**, welche
einen Bruchteil der Strahlung der Laserpulse mit einer zeitlichen Verschiebung gegenüber den auf dem optischen Hauptweg zwischen den Laserresonatorspiegeln **(3, 5; 35; 45)** oszillierenden Laserpulsen in deren Modevolumen im Laserresonator **(1, 49)** zurückführt, **dadurch gekennzeichnet**, daß
die Nebenrückführeinrichtung **(17; 33; 45/47)** nur optisch linear wirkende Komponenten enthält und so ausgebildet ist, daß
der durch sie rückgeführte Nebenteil der Strahlung der Laserpulse in der Größenordnung von 0,5- bis 50 000-facher Stärke der spontanen Strahlungsemission der oszillierenden Resonatorwelle liegt.

6. Laser nach Anspruch 5, **dadurch gekennzeichnet**, daß
die Nebenrückführeinrichtung **(45/47)** einen Nebenreflektor **(47)** hat, der
innerhalb des Resonators **(49)** verstellbar zur örtlichen Pulsmitte der im Resonator **(49)** oszillierenden Laserpulse der Resonatorwelle vor einem **(45)** der Resonatorspiegel **(45, 3)** angeordnet ist, der durch Verstellen erzielte seitliche Versatz **(b)** zum Resonatorspiegel **(45,3)** und der Reflexionsgrad des Nebenreflektors **(47)** derart bemessen sind, daß
von der auf ihn einfallenden Intensität der im Laserresonator oszillierenden Laserpulse nur soviel in das Modevolumen der Resonatorwelle rückreflektiert wird, daß
sie in der Größenordnung von 0,5- bis 50 000-facher Stärke der spontanen Strahlungsemission der oszillierenden Resonatorwelle liegt.

7. Laser nach Anspruch 5, **dadurch gekennzeichnet**, daß
die Nebenrückführeinrichtung **(33; 45/47)** und
einer der Resonatorspiegel **(3, 35, 45)** zu einer Einheit ausgebildet sind.

8. Laser nach Anspruch 7, **dadurch gekennzeichnet**, daß
die Nebenrückführeinrichtung ein durch eine Trennfläche **(41)** geteilter Kubus **(33)** mit einer Pulseintrittsfläche **(37)**,
von deren Oberfläche keine Strahlung in das Modevolumen zurücksendbar ist, und
mit einer ersten und einer zweiten wenigstens teilweise verspiegelten Außenfläche **(39, 43)** ist, wobei
die Trennfläche **(41)** so angeordnet ist,
daß ein Nebenteil der Strahlung der in den Kubus **(33)** einfallenden Strahlung der Laserpulse durch die Trennfläche **(41)** hindurch auf die erste verspiegelte Außenfläche **(43)** des Kubusses **(33)** geführt und
von dieser wieder über die Trennfläche **(41)** teilweise in das Modevolumen zurückgeführt wird und ein
von der Trennfläche **(41)** reflektierter Hauptteil der Strahlung der Laserpulse an der zweiten verspiegelten Außenfläche **(39)** des Kubusses **(33)** wieder über die Trennfläche **(41)** in das Modevolumen reflektiert wird, wobei
der Transmissionsgrad der Trennfläche **(41)** und der Reflexionsgrad der ersten verspiegelten Außenfläche **(43)** so bemessen sind, daß
der Strahlungsnebenteil in der Größenordnung von nur 0,5- bis 50 000-facher Stärke der spontanen Strahlungsemisson der oszillierenden Resonatorwelle rückgeführt wird, und
die Reflexionsgrade des verspiegelten Teils der zweiten Außenfläche **(39)** und der Trennfläche **(41)** so bemessen sind, daß
der verspiegelte Teil **(35)** der zweiten Außenfläche
**(39)** als Resonatorspiegel für den Strahlungshauptteil wirkt.

9. Laser nach Anspruch 8, **dadurch gekennzeichnet**, daß
die beiden Teile **(33a, 33b)** des Kubusses **(33)** entlang ihrer Trennfläche **(41)** verschiebbar sind, wobei
die zweite verspiegelte Außenfläche **(39)** in ihrer Lage verbleibt und
der optische Abstand der ersten verspiegelten Außenfläche **(43)** zum ihr gegenüberliegenden Resonatorspiegel **(3)** veränderbar ist.

10. Laser nach Anspruch 8 oder 9, **dadurch gekennzeichnet**, daß
die erste verspiegelte Außenfläche **(43)** des Kubusses **(33)** diffus reflektierend ausgebildet ist.

## Claims

1. Process for the generation of short laser pulses, in particular with pulse widths in the picosecond and subpicosecond range, with a mode-coupled laser in which, in addition to the radiation of the resonator wave fed back by the resonator mirror (3, 5; 35; 45), oscillating in the laser resonator (1, 49) and generating the laser pulses, a fraction of the radiation of each laser pulse is chronologically displaced and fed back into its mode volume via a secondary optical path, **characterised in that** only a photon packet from each laser pulse of the order of magnitude of 0.5 to 50 000 times the level of the spontaneous radiation of the oscillating resonator wave is fed back into the mode volume in the laser resonator (1) via a secondary optical path which contains only components having an optically linear action.

2. Process according to Claim 1, **characterised in that** the feedback is set to a value between 10⁻⁶ and 10⁻¹⁰ of the laser output intensity.

3. Process according to Claim 1 or 2, **characterised in that** the secondary optical path is designed so that the photon packets passing through it are introduced into the laser pulses oscillating in the laser resonator (1, 49).

4. Process according to Claim 3, **characterised in that** the optical length of the secondary optical path for optimising the laser pulses is preferably adjusted in a range (29) of ± 0.5 mm with respect to the optical length of the main optical path between the resonator mirrors (3, 5; 35; 45).

5. Laser for implementing the process according to one of the Claims 1 to 4, having an auxiliary feedback device (17; 33; 45/47) with feeds back a fraction of the radiation of the laser pulses, with a chronological displacement with respect to the laser pulses oscillating on the main optical path between the laser resonator mirrors (3, 5; 35; 45), into their mode volume in the laser resonator (1, 49), **characterised in that** the auxiliary feedback device (17; 33; 45/47) contains only components acting in an optically linear fashion and is designed so that the secondary part of the radiation of the laser pulses fed back by said auxiliary feedback device is 0.5 to 50 000 times higher than the spontaneous radiation of the oscillating resonator wave.

6. Laser according to Claim 5, **characterised in that** the auxiliary feedback device (45/47) has a secondary reflector (47) which can be adjusted inside the resonator (49) to the local centre of the pulse of the laser pulses oscillating in the resonator (49) and is arranged in front of one (45) of the resonator mirrors (45, 3), which secondary reflector, by adjustment of the lateral displacement (b) with respect to the resonator mirror (45, 3) and the degree of reflection of the secondary reflector (47) is designed so that the portion of the intensity of the laser pulses oscillating in the laser resonator impinging upon it and reflected back into the mode volume of the resonator wave is only 0.5 to 50 000 times higher than the spontaneous radiation of the oscillating resonator wave.

7. Laser according to Claim 5, **characterised in that** the auxiliary feedback device (33; 45/47) and one of the resonator mirrors (3, 35, 45) are formed as one unit.

8. Laser according to Claim 7, **characterised in that** the auxiliary feedback device is a cube (33) divided by a separating face (41) with a pulse input face (37) from whose surface no radiation can be returned to the mode volume, and with a first and a second at least partially metal-coated external face (39, 43), the separating face (41) being arranged so that a secondary part of the radiation of the laser pulses impinging upon the cube (33) passes through the separating face (41) to the first metal-coated external face (43) of the cube (33) and is partially fed back from the cube via the separating face (41) into the mode volume, and a main part of the radiation of the laser pulses reflected by the separating face (41) is again reflected at the second metal-coated external face (39) of the cube (33) via the separating face (41) into the mode volume, whereby the transmission ratio of the separating face (41) and the degree of reflection of the first metal-coated external face (43) are designed so that the secondary part of the radiation fed back is only 0.5 to 50 000 times the level of the spontaneous radiation of the oscillating resonator wave, and the degrees of reflection of the metal-coated part of the second external face (39) and the separating face (41) are chosen so that the metal-coated part (35) of the second external face (39) acts as a resonator mirror for the main part of the radiation.

9. Laser according to Claim 8, **characterised in that** the two parts (33a, 33b) of the cube (33) can be displaced along their separating face (41), the second metal-coated external face (39) remaining in position, and the optical distance between the first metal-coated external face (43) and the resonator mirror (3) opposite it can be varied.

10. Laser according to Claim 8 or 9, **characterised in that** the first metal-coated external face (43) of the cube (33) is designed with a diffuse reflecting property.

## Revendications

1. Méthode pour générer des impulsions laser courtes, notamment avec des largeurs d'impulsion de l'ordre de la picoseconde et de la sous-picoseconde, avec un laser à couplage de modes, avec laquelle une fraction du rayonnement de chaque impulsion laser, en plus du rayonnement de l'onde de la cavité réinjectée par les miroirs de la cavité (3, 5 ; 35 ; 45), oscillant dans la cavité du laser (1, 49), générant les impulsions laser, est ramenée dans leur volume de modes décalée dans le temps par un chemin optique secondaire, caractérisée par le fait que seul un paquet de photons de l'ordre de 0,5 à 50 000 fois la puissance de l'émission rayonnée spontanée de l'onde oscillante de la cavité issu de chaque impulsion laser est ramené dans le volume de modes dans la cavité du laser (1) au travers du chemin optique secondaire qui ne contient que des composants à effet optique linéaire.

2. Méthode conforme à la revendication 1, caractérisée par le fait que la réaction est réglée sur une valeur comprise entre 10⁻⁶ et 10⁻¹⁰ fois l'intensité de sortie du laser.

3. Méthode conforme à la revendication 1 ou 2, caractérisée par le fait que le chemin optique secondaire est dimensionné de façon à ce que les paquets de photons passant au travers de lui sont amenée dans les impulsions laser osaillant dans la cavité du laser (1, 49).

4. Méthode conforme à la revendication 3, caractérisée par le fait que la longueur optique du chemin optique secondaire, afin d'optimiser les impulsions laser, est réglée de préférence dans une zone (29) située à ± 0,5 mm de la longueur optique du chemin optique principal entre les miroirs de la cavité (3, 5 ; 35 ; 45).

5. Laser pour la mise en oeuvre de la méthode conforme à l'une des revendications 1 à 4, avec un dispositif de réaction secondaire (17 ; 33 ; 45/47), lequel ramène une fraction du rayonnement des impulsions laser avec un décalage temporel par rapport aux impulsions laser oscillant dans leur volume de modes dans la cavité du laser (1, 49) sur le chemin optique principal entre les miroirs de la cavité (3, 5 ; 35 ; 45) du laser, caractérisé par le fait que le dispositif de réaction secondaire (17 ; 33 ; 45/47) ne contient que des composants à effet optique linéaire et est formé de telle façon que l'ordre de grandeur de la fraction secondaire du rayonnement des impulsions laser ramenées au travers de lui est seulement compris entre 0,5 et 50 000 fois la puissance de l'émission rayonnée spontanée de l'onde résonnante de la cavité.

6. Laser conforme à la revendication 5, caractérisé par le fait que le dispositif de réaction secondaire (45/47) est muni d'un réflecteur secondaire (47), lequel est disposé à l'intérieur de la cavité (49) de façon à être réglable par rapport au centre local des impulsions laser de l'onde de la cavité oscillant dans la cavité (49) devant l'un (45) des miroirs de la cavité (45, 3), le décalage latéral obtenu par réglage (b) par rapport au miroir de la cavité (45, 3) et le degré de réflexion du réflecteur secondaire (47) sont dimensionnés de telle façon que la proportion de l'intensité des impulsions laser oscillant dans la cavité du laser et arrivant sur lui n'est réfléchie dans le volume de modes de l'onde de la cavité qu'avec un ordre de grandeur compris entre 0,5 et 50 000 fois la puissance de l'émission rayonnée spontanée de l'onde oscillante de la cavité.

7. Laser conforme à la revendication 5, caractérisé par le fait que le dispositif de réaction secondaire (33 ; 45/47) et l'un des miroirs de la cavité (3, 35, 45) forment un élément unique.

8. Laser conforme à la revendication 7, caractérisé par le fait que le dispositif de réaction secondaire est un cube (33) divisé par une surface de séparation (41) et ayant une surface d'entrée des impulsions (37) à partir de laquelle aucun rayonnement ne peut être renvoyé dans le volume de modes, et ayant une première et une deuxième surfaces extérieures (39, 43) au moins partiellement réfléchissantes, la surface de séparation (41) étant disposée de telle façon qu'une fraction secondaire du rayonnement des impulsions laser pénétrant dans le cube (33) est acheminée au travers de la surface de séparation (41) sur la première surface extérieure réfléchissante (43) du cube (33) et, qu'à partir de celle-ci, elle est à nouveau partiellement ramenée dans le volume de modes par la surface de séparation (41) et une partie principale du rayonnement des impulsions laser réfléchie par la surface de séparation (41) au niveau de la deuxième surface extérieure réfléchissante (39) du cube (33) est à nouveau réfléchie dans le volume de modes par la surface de séparation (41), le degré de transmission de la surface de séparation (41) et le degré de réflexion de la première surface extérieure réfléchissante (43) étant dimensionnée de telle façon que la fraction secondaire du rayonnement, de l'ordre de seulement 0,5 à 50 000 fois la puissance de l'émission rayonnée spontanée de l'onde oscillante de la cavité est renvoyée, et que les degrés de réflexions de la partie réfléchissante de la deuxième surface extérieure (39) et de la surface de séparation (41) sont dimensionnés de telle façon que la partie réfléchissante (35) de la deuxième surface extérieure (39) agit comme un miroir de cavité pour la partie principale du rayonnement.

9. Laser conforme à la revendication 8, caractérisé par le fait que les deux parties (33a, 33b) du cube (33) peuvent être décalées le long de leur surface de séparation (41), la deuxième surface extérieure réfléchissante (39) restant dans sa position et l'écart optique entre la première surface extérieure réfléchissante (43) et son miroir de cavité (3) opposé correspondant étant variable.

10. Laser conforme aux revendications 8 ou 9, caractérisé par le fait que la première surface extérieure réfléchissante (43) du cube (33) est formée de façon à avoir une réflexion diffuse.
